# EUROPÄISCHE PATENTSCHRIFT

(11) **EP 2 393 883 B1**
(45) Veröffentlichungstag und Bekanntmachung des Hinweises auf die Patenterteilung: **17.04.2013**
(21) Anmeldenummer: 10701704.8
(22) Anmeldetag: 02.02.2010
(51) Int. Cl.: C09C 1/04, C09D 7/12

(54) **MIT PHOSPHONOCARBONSÄURE MODIFIZIERTE ZINKOXID-PARTIKEL UND VERWENDUNG VON ZINKOXID-PARTIKELN**
ZINC OXIDE PARTICLES WHICH HAVE BEEN MODIFIED WITH PHOSPHONOCARBOXYLIC ACID AND USE OF ZINC OXIDE PARTICLES
PARTICULES D'OXYDE DE ZINC MODIFIÉES PAR DE L'ACIDE PHOSPHONOCARBOXYLIQUE ET UTILISATION DE PARTICULES D'OXYDE DE ZINC

(30) Priorität: 03.02.2009 EP 09151977; 17.04.2009 EP 09158187
(43) Veröffentlichungstag der Anmeldung: 14.12.2011
(73) Patentinhaber: Bühler PARTEC GmbH, 66123 Saarbrücken (DE)
(72) Erfinder: BURGARD, Detlef, 66333 Völklingen (DE); HEROLD, Marc, 66123 Saarbrücken (DE); STEINGRÖVER, Klaus, 66119 Saarbrücken (DE)
(74) Vertreter: Barz, Peter
(86) Internationale Anmeldenummer: PCT/EP2010/051248
(87) Internationale Veröffentlichungsnummer: WO 2010/089295

(56) Entgegenhaltungen:
- WO-A-01/83662
- WO-A-03/046029
- WO-A-2005/060610
- WO-A-2005/110339
- DE-A1- 19 952 383
- DE-A1-102005 053 705
- GB-A- 2 293 373
- US-A1- 2008 191 168
- US-A1- 2008 257 213

## Beschreibung

Die Erfindung betrifft nanopartikuläres Zinkoxid, welches mit einer Phosphonocarbonsäure beschichtet ist, und die Verwendung von nanopartikulärem Zinkoxid.

Die Bedeutung von wasserbasierten Bindemittelsystemen wie Beschichtungssystemen in der industriellen Anwendung wird zunehmend größer. Grund dafür sind vor allem gesetzliche Auflagen im Hinblick auf die Umweltverträglichkeit der zu verwendenden Beschichtungs- und Bindemittelsysteme, wie z.B. die VOC Richtlinie. Allerdings zeigen wasserbasierte Systeme oft noch Nachteile gegenüber auf Lösemittel basierten Systemen, wie z.B. eine geringe Blockfestigkeit oder lange Trocknungszeiten, die eine Weiterverarbeitung oder Benutzung von beispielsweise lackierten Teilen stark verzögern.

Zinkoxid wird bereits für verschiedene Zwecke in wasserbasierten Lacken eingesetzt. Gut bekannt ist seine Verwendung als Weißpigment. In Holzlacken wird ZnO neben anderen Zinksalzen als Additiv verwendet, um das Ausbluten von Gerbsäure zu verhindern. Es wird auch in Grundierungen auf Metallen als Haftvermittler verwendet. Für diese Anwendungen werden Zinkoxidpartikel mit einem Durchmesser von mehr als 1 µm genutzt.

Zinkoxid und andere Metalloxide werden auch in Lacken eingesetzt, um UV-Schutz, Lösemittelbeständigkeit und Oberflächenhärte zu verbessern. In WO 2008/049679 wird die Verwendung von Nanopartikeln für Lacke auf organischer Lösemittelbasis beschrieben, um eine Verbesserung der Kratzfestigkeit und der Flexibilität zu erreichen. US-B1-6342556 beschreibt die Verwendung von ZnO-Partikeln mit einem Durchmesser von 10 bis 80 nm in Wasser in Kombination mit Lacken für einen verbesserten UV-Schutz von Holz.

WO 2005/071002 betrifft die Verwendung von einer Dispersion enthaltend ZnO mit einer BET Oberfläche von 10 bis 200 m²/g als transparenten UV-Schutz in Lacken. Bei den in dieser Anmeldung beschriebenen ZnO-Partikeln handelt es sich um pyrogen hergestellte Partikel, die in Dispersion eine mittlere Sekundärpartikelgröße von weniger als 300 nm aufweisen. Diese pyrogen erzeugten Partikel besitzen zwar eine spezifische Oberfläche in der Größenordnung von nanopartikulärem Zinkoxid, mit ihnen lassen sich aber keine transparenten Schichten herstellen. Das in WO 2005/071002 spezifizierte Additiv ist daher zur Verwendung in transparenten Lacksystemen ungeeignet.

In WO 2005/071029 wird Zinkoxid mit einem Partikeldurchmesser kleiner 100 nm verwendet, um die Oberflächenhärte und die Kratzfestigkeit von Polyurethan (PUR)-Lacken zu verbessern. WO 2006/023064 betrifft die Verwendung von ZnO-Dispersionen in PUR-Bindem zur Herstellung von kratzfesten Fußbodenbeschichtungen. In WO2006/023064 wird die Herstellung von kratzfesten Holzschutzlacken durch den Einsatz von ZnO-Dispersionen in Acrylbindem beschrieben.

WO 2006/023064 beschreibt die Verwendung von 2 bis 20% nanoskaligem Zinkoxid in acrylathaltigen Lacken und Beschichtungen, um z.B. die Haftung, Tanninbeständigkeit oder Korrosionsbeständigkeit zu verbessern. Da der Anteil des relativ kostenintensiven ZnO bei über 2 % liegt, ist die Zusammensetzung wirtschaftlich für den Bereich der Topcoats oft schwer durchzusetzen. WO 2006/023065 betrifft Beschichtungszusammensetzungen, die mikroskalige TiO₂-Pigmente und nanoskaliges Metalloxid wie ZnO enthalten, wobei das nanoskalige Metalloxid für einen gleichmäßigen Abstand der TiO₂-Pigmente in der Schicht sorgen soll.

WO 2005/119359 und US-A1-2003/0180466 beschreiben filmbildende Zusammensetzungen, die Bindemittel, Nanopartikel, Tensid und ein polymeres Dispergiermittel umfassen, um die Abriebbeständigkeit von damit beschichteten Substraten zu verbessern.

WO 2008/064114 betrifft die Verwendung von ZnO-Teilchen mit einem Durchmesser von weniger als 1 µm in einem Acrylat-Hybridlack zur Verbesserung der Lösemittelbeständigkeit, der Feuchtigkeitsbeständigkeit und der UV-Beständigkeit.

In DE 102007032189 A1 wird ein spezielles, über Sol-Gel Verfahren in organischen Lösemitteln hergestelltes nanoskaliges ZnO beschrieben, das mit Si-haltigen Molekülen oberflächenmodifiziert werden kann. So erhaltene ZnO-Partikeldispersionen in organischen Lösemitteln werden als Katalysator benutzt, um die Vernetzungsgeschwindigkeit z.B. bei 2K-PU Lacken zu erhöhen. Nachteilig ist neben dem aufwändigen Herstellungsverfahren, dass das System nur für lösemittelhaltige Lacke und nur für 2K Systeme einsetzbar ist. Die stark verkürzte Topfzeit ist ein weiterer Nachteil, da das Zeitfenster für eine Weiterverarbeitung deutlich eingeschränkt wird.

Zur Herstellung von stabilen Beschichtungs- bzw. Bindemitteldispersionen, die ZnO enthalten, ist es notwendig, dass die ZnO-Partikel eine gleichnamige Ladung, aufweisen. Wasserbasierte Bindemittelsysteme, einschließlich Beschichtungszusammensetzungen und Latexdispersionen, bestehen vielfach aus anionisch stabilisierten Partikeln. Viele dieser Dispersionen sind auf pH-Werte zwischen 7 und 9 eingestellt. Der isoelektrische Punkt von ZnO liegt bei einem pH-Wert von ca. 9-9,5. Daher liegen ZnO-Partikel mit einem pH-Wert von kleiner 9 positiv und damit kationisch vor. Die Einstellung des pH-Werts einer ZnO-Dispersion oberhalb des isoelektrischen Punktes, um so negativ geladene Partikel zu erhalten, ist aufgrund der amphoteren Eigenschaft des Zinkoxids nicht möglich, da es sich dann auflöst.

DE 10163256 A1 offenbart ein Zinkoxid, welches mit einer Oligo- oder Polyethylenglycolsäure oberflächenmodifiziert ist. Das so oberflächenmodifizierte Zinkoxid kann in Wasser dispergiert werden. Nachteilig ist die Modifizierung des Zinkoxids in einer nicht-wässrigen Umgebung. Um eine wässrige Dispersion zu erhalten, muss zuerst das organische Lösemittel entfernt werden und dann das mit einer Oligo polyethylenglycolsäure modifizierte ZnO in Wasser erneut dispergiert werden. Die Anwendung der Dispersion ist dabei ob des positiven Zetapotentials beschränkt.

Eine Möglichkeit der Stabilisierung von ZnO ist die Verschiebung des isoelektrischen Punkts hin zu kleineren pH-Werten. Hierzu können Polyelektrolyte eingesetzt werden. In WO A 95/24359 wird z.B. das Natriumsalz einer Polyacrylsäure als Mahladditiv bei der Mahlung von Zinkoxid verwendet. E. Tang et. al., Appl. Surf. Sci., 252, 2006, 5227-5232 beschreiben die Verwendung einer Polymethacrylsäure mit einer Molmasse von weniger als 10.000 g/mol in Wasser, die mit NaOH auf einen pH-Wert von 5,0-5,5 eingestellt wird, zur Stabilisierung einer wässrigen Zinkoxiddispersion. Zur Herstellung von stabilen nanoskaligen Dispersionen werden große Mengen der Polymethacrylsäure wie 10 bis 50% bezogen auf das nanoskalige Pulver benötigt. Außerdem besteht die Tendenz zur Verbrückung bei hohen Feststoffanteilen.

WO 2007/082155 betrifft die Verwendung von 2,3-Dihydroxynaphthalin-6-sulfonsäuresalzen und Cathechin-3,5-disulfonaten zur Dispergierung von Zinkoxid in Gegenwart von Ethylenglycol, Propylenglycol, Glycerin oder deren Monoethem. Auch hierdurch wird der isoelektrische Punkt zu kleineren pH-Werten verschoben. Nachteilig ist, dass sich die Dispersionen besonders unter Lichteinfluss oder in Gegenwart von Übergangsmetallionen, besonders Eisenionen, stark verfärben, was eine Anwendung der ZnO-Dispersion in Lacken stark einschränkt.

Eine weitere Möglichkeit, den isoelektrischen Punkt zu kleineren pH-Werten zu verschieben, ist die Umhüllung der Partikel mit einer Silicaschicht. SiO₂ hat einen isoelektrischen Punkt von 2 und ist oberhalb dieses pH-Wertes negativ geladen. DE 10118309 C2 beschreibt die Herstellung einer anionisch stabilisierten, wässrigen Dispersion von nanopartikulärem Zinkoxid und deren Verwendung als Vulkanisationsaktivator für die Vulkanisation von Latex-Formkörpern. Dabei wird die negative Ladung auf dem Partikel durch eine Umhüllung mit Silikaten erreicht. Hierfür wird Zinkoxid bei pH-Werten unterhalb des isoelektrischen Punktes in Wasser dispergiert und durch Zugabe von Alkalisilikatiösungen oder Wasserglas/Base-Mischungen versetzt, so dass ZnO anionisch umgeladen wird. Nachteilig ist die Aufwachsgeschwindigkeit der Silikate, die so zu steuern ist, dass keine größeren Agglomerate entstehen. Durch das Alkalisilikat eingebrachten Ionen müssen anschließend aus der Dispersion entfernt werden, um eine ausreichende Lagerstabilität bei wirtschaftlichen Konzentrationen zu erzielen.

Phosphonate werden in Kühlwassersystemen, Entsalzungsanlagen und bei der Ölförderung, wo sie die Ausfällung von Salzen verhindern, industriell eingesetzt. In der Papier- und Textilindustrie werden sie als Stabilisator für die Peroxidbleiche eingesetzt, wodurch Metalle komplexiert werden, die sonst das Peroxid inaktivieren. 2-Phosphono-1,2-4-butantricarbonsäure wird in der Kühl- und Prozesswasserbehandlung sowie im Bereich der Reinigerformulierungen als Stein- und auch Korrosionsinhibitor eingesetzt.

EP 0760387 B1 betrifft ein antikorrosives Pigment aus einem Metallorganophosphonat. Die Pigmente werden durch Umsetzung von Organophosphonsäuren oder Phosphoncarbonsäuren mit geeigneten mehrwertigen Metallkationen, z.B. als Oxide, Hydroxide, Carbonate, Chloride, Nitrate oder Sulfate, hergestellt werden. Bei Einsatz der Oxide oder Hydroxide findet eine einfache Säure-Base-Reaktion statt, wodurch die Oxide oder Hydroxide in die entsprechenden Phosphonatsalze übergeführt werden.

Es besteht somit Bedarf an Additiven für wässrige Bindemittelsysteme, wie z.B. Beschichtungssysteme, mit denen die Trocknungszeit deutlich verkürzt und die Blockfestigkeit erhöht werden kann, ohne durch Zugabe großer Mengen das Gesamtprofil des Bindemittelsystems zu verschlechtern. Dabei sollen bereits geringe. Mengen von weniger als 2 Gew.-% einen signifikanten Effekt erzielen, um die Herstellungskosten nicht negativ zu beeinflussen und die sonstigen Eigenschaften des Bindemittelsystems, insbesondere eines Lacks möglichst wenig zu beeinträchtigen.

WO 01/83662 A1 beschreibt die Verwendung von nanoskaligen Teilchen zur Verbesserung der Schmutzablösung, insbesondere zur Textilausrüstung, in Textil- waschmitteln, zur Textilvorbehandlung oder -nachbehandlung. Als Beispiele für geeignete Partikel werden unter anderem ZnO-Partikel genannt. Die Oberfläche der nanoskaligen Partikel kann mit Komplexbildnern modifiziert werden, wobei unter anderem 2-Phosphonobutan-1,2,4-tricarbonsäure als Beispiel für einen Komplexbildner genannt wird.

DE 19952383 A1 betrifft Wasch- und Reinigungsmittel, die Tenside und nanoskalige Teilchen enthalten, wodurch temporär schmutzabweisende Eigenschaften verliehen werden können. Als Beispiel für geeignete Teilchen wird unter anderen ZnO genannt, wobei Komplexbildner wie z.B. 2-Phosphonobutan-1,2,4-tricarbonsäure zur Oberflächenmodifizierung der Teilchen eingesetzt werden können.

GB 2293373 A betrifft wässrige Dispersionen eines teilchenförmigen Feststoffs, bei denen durch Zusatz bestimmter Phosphonsäuren die Ausflockung der Teilchen vermieden werden soll. Zinkoxid wird als ein Beispiel unter mehreren für die Teilchen genannt.

Die Aufgabe der Erfindung bestand daher in der Bereitstellung eines Materials, welches die Trocknungseigerischaften und das Verblockungsverhalten wasserbasierter Bindemittelsysteme, insbesondere Beschichtungssysteme, verbessert.

Überraschenderweise wurde gefunden, dass bei wässrigen Bindemittelsystemen durch den Einsatz von ZnO-Nanopartikeln, z.B. als Pulver oder in Form einer Dispersion, die Blockfestigkeit erhöht und die Trocknungszeit deutlich verringert wird. Die Zugabe der nanoskaligen ZnO-Partikel zum wässrigen Bindemittelsystem ergibt eine überraschend starke Verkürzung der Trockenzeit sowie eine überraschende Verbesserung der Blockfestigkeit des gehärteten Bindemittelsystems, z.B. bei einem auf ein Substrat aufgetragenen und getrockneten bzw. gehärteten Lack im Vergleich zu Lacken, die keine nanoskaligen ZnO-Teilchen enthalten.

Es ist zwar bekannt, dass ZnO oder Zn-Verbindungen die Vernetzung von Doppelbindungen katalysieren; jedoch kommt es beim Filmbildungsprozess von wässrigen Dispersionslacken oder-bindemittelsystemen, insbesondere bei 1K Systemen, nicht zu einer weiteren Vernetzung von z.B. Doppelbindungen, sondern zu einem physikalischen Zusammenfließen der Bindemittelpartikel nach Entfernen der Flüssigphase und gegebenenfalls einer Temperaturerhöhung. Daher war es überraschend, dass Blockfestigkeit und Trocknungszeit durch Zusatz von nanoskaligem ZnO bei den beschriebenen Systemen verbessert werden konnten.

Ferner hat sich gezeigt, dass die Verwendung von nanoskaligen ZnO-Partikeln in wässrigen Bindemittelsystemen die Beständigkeit des getrockneten oder gehärteten Bindemittelsystems gegen Chemikalien, Detergenzien, Wärme, Bewitterung und/oder biologischen Befall erhöht.

Es hat sich außerdem gezeigt, dass es besonders vorteilhaft ist, wenn hierfür nanoskalige ZnO-Partikel eingesetzt werden, die mit einer Phosphonocarbonsäure modifiziert sind. Die mit Phosphonocarbonsäuren modifizierten nanoskaligen ZnO-Partikel zeigen nicht nur ein stark verbessertes Dispergiervermögen in Wasser, sondern auch eine sehr hohe Kompatibilität mit den getrockneten Lackfilmen. Dies zeigt sich z.B. durch eine erhöhte Transparenz und Trübungsfreiheit von unpigmentierten Lackfilmen, die statt den herkömmlichen ZnO-Partikeln nanoskalige ZnO Partikel enthalten, die mit Phosphonocarbonsäuren modifiziert sind. Weitere Vorteile der erfindüngsgemäßen mit Phosphonocarbonsäure modifizierten nanoskaligen ZnO-Partikel sind die Bildung einer stabileren Dispersion und die Möglichkeit, ZnO-Dispersionen mit im Vergleich zu herkömmlichen ZnO-Dispersionen kleineren Teilchen zu erhalten.

Gegenstand der vorliegenden Erfindung ist demgemäß die Verwendung von nanoskaligen ZnO-Partikeln in einem wässrigen Bindemittelsystem zur Verringerung der Trockenzeit oder zur Erhöhung der Blockfestigkeit des getrockneten oder gehärteten Bindemittelsystems oder zur Erhöhung der Beständigkeit des getrockneten oder gehärteten Bindemittelsystems gegen Chemikalien, Detergenzien, Wärme, Bewitterung oder biologischen Befall.

Ferner betrifft die Erfindung oberflächenmodifizierte, nanoskalige Zinkoxid-Partikel, dadurch gekennzeichnet, dass die Zinkoxid-Partikel mit einer Phosphonocarbonsäure, einem Salz der Phosphonocarbonsäure oder einer Mischung davon oberflächenmodifiziert sind, wobei die Phosphonocarbonsäure 2-Phosphono-1,2,4-butantricarbonsäure ist und eine Mischung von 2-Phosphono-1,2,4-butantricarbonsäure und Satz von 2-Phosphono-1,2,4-butantricarbonsäure mit einwertigen Kationen (M⁺) verwendet wird, wobei das Molverhältnis M⁺ zu 2-Phosphono-1,2,4-butantricarbonsäure und deren Salzen im Bereich von 0,1 : 1 bis 3 :1 liegt.

Die Erfindung wird im folgenden ausführlich erläutert.

Die nanoskaligen ZnO-Partikel werden als Additiv zu einem wässrigen Bindemittelsystem gegeben, um die Trockenzeit des Bindemittelsystems zu verkürzen und/oder die Blockfestigkeit des Bindemittelsystems zu erhöhen. Die Trockenzeit bezieht sich auf die Dauer der Trocknung des wässrigen Bindemittelsystems unter gegebenen Bedingungen bei bestimmungsgemäßer Anwendung, z.B. nach Auftrag einer wässrigen Beschichtungszusammensetzung auf ein Substrat und anschließender Trocknung bzw. Härtung. Wie den Fachleuten bekannt wird unter der Blockfestigkeit des wässrigen Bindemittelsystems die folgende Eigenschaft des getrockneten bzw. gehärteten Bindemittelsystems verstanden. Unter Verblocken ist das Zusammenschweißen von zwei beschichteten Gegenständen unter Wärme, Druck oder Feuchtigkeit zu verstehen. Die Blockfestigkeit ist ein Maß für die Verblockung, welches mit einer Skala von 0 bis 5 bewertet wird. Dabei gilt, je niedriger der Wert desto geringer die Verblockung. Die Verblockungsprüfung erfolgte gemäß Richtlinie 6 "Verblockung von Anstrichsystemen auf Holzfenstern" (03/99) des Institutes für Fenstertechnik e.V., Rosenheim.

Die nanoskaligen ZnO-Partikel werden als Additiv zu einem wässrigen Bindemittelsystem gegeben, um die Beständigkeit des getrockneten oder gehärteten Bindemittelsystems gegen Chemikalien, Detergenzien, Wärme, Bewitterung und/ oder biologischen Befall zu erhöhen. Die chemische Beständigkeit bezieht sich auf die Beständigkeit gegen Chemikalien, insbesondere Flüssigkeiten, wie z.B. Wasser, Lösungsmittel, Benzin oder Detergenzien. Die chemische Beständigkeit kann z.B. bestimmt werden gemäß ASTM D-54021 (Rub Test), bei dem ein mit der Chemikalie bzw. dem Detergenz getränktes Tuch mit einem bestimmten Anpressdruck über eine beschichtete Fläche gerieben und die Anzahl Doppelhübe bis zur völligen Zerstörung der Beschichtung gemessen wird, oder gemäß EN ISO 2812-3 und DIN EN ISO 4628-2 (Spot Test), bei dem ein Tropfen der Chemikalie oder des Detergenz auf ein beschichtetes Substrat aufgebracht und nach einer definierten Einwirkdauer abgewischt und das Schadensbild dann visuell beurteilt wird. Die Hitzebeständigkeit bezieht sich auf die Beständigkeit gegen thermische Zersetzung oder Verkleben bei erhöhten Temperaturen des getrockneten oder gehärteten Systems. Die Bewitterungsbeständigkeit kann gemäß DIN EN ISO 11507 bestimmt werden, indem beschichtete Substrate unter UV Bestrahlung ca. 1000 h einer feuchten Atmosphäre und Temperaturwechseln ausgesetzt und dann visuell bewertet werden.

Die Beständigkeit gegen biologischen Befall betrifft Beständigkeit des getrockneten oder gehärteten Systems gegen Befall mit Pilzen, Schimmel, Algen, Bakterien oder anderen biologischen Systemen. Die nanoskaligen ZnO-Teilchen eignen sich somit zur Verwendung als Biozid, insbesondere Fungizid und Algizid, in wässrigen Bindemittelsystemen.

Die Erhöhung der Blockfestigkeit und die genannte Erhöhung der Beständigkeit durch Verwendung der nanoskaligen ZnO-Partikel in wässrigen Bindemittelsystemen bezieht sich auf die Blockfestigkeit und Beständigkeit des getrockneten oder gehärteten Bindemittelsystems. Bei der erfindungsgemäßen Verwendung werden nanoskalige ZnO-Partikel in das wässrige Bindemittelsystem gegeben, das wässrige Bindemittelsystem wird auf ein Substrat aufgebracht und anschließend wird das Bindemittelsystem getrocknet und/oder gehärtet. Die Art der Trocknung oder Härtung richtet sich nach dem Bindemittelsystem und wird in der dem Fachmann bekannten Weise durchgeführt, z.B. durch Ablüften, Erwärmen und/oder Bestrahlen. Die Trocknung oder Härtung kann physikalische Trocknung und/oder chemische Aushärtung oder Vernetzung umfassen.

Bei dem wässrigen Bindemittelsystem, zu dem die nanoskaligen ZnO-Partikel als Additiv gemäß der erfindungsgemäßen Verwendung zugegeben werden, kann es sich um jedes übliche, dem Fachmann bekannte wässrige Bindemittelsystem handeln. Solche wasserbasierten Bindemittelsysteme sind im Handel erhältlich. Das Bindemittelsystem ist auf Wasserbasis, d.h. ein größerer Teil, z.B. mindestens 20 Gew.-%, des in dem Bindemittelsystem eingesetzten Lösemittels ist Wasser. In dem wässrigen Bindemittelsystem kann nach Bedarf auch organisches Lösemittel enthalten sein, das Bindemittelsystem enthält aber in der Regel weniger als 20 Gew.-%, bevorzugt weniger als 10 Gew.-%, an organischen Lösemitteln, bezogen auf das Gesamtgewicht des Bindemittetsystems.

Das wässrige Bindemittelsystem umfasst ein oder mehrere organische oder anorganische Bindemittel. Hierbei kann es sich um jedes für wässrige Bindemittelsysteme gebräuchliche Bindemittel handeln. Beispiele für geeignete Bindemittel sind Polyester, Polyesteracrylate, Polyesterurethanacrylate, Polyurethane, hierbei u.a. 1 K-Systeme und 2K-Systeme, Reinacrylate, Acrylatcopolymere, hierbei unter anderen Acrylat-Styrol-Copolymere, Butylacrylat-Styrol-Copolymere, Methylmethacrylat-Butylacrylat-Copolymere, Acrylat-Vinylacetat-Copolymere, Acrylat-Polyurethan-Copolymere (Hybridpolymere), Acrylat-Expoxy-Copolymere und aromatische Epoxidacrylate, Styrol-Butadien-Copolymere, Polybutadiene, Latex, Epoxide, Polyamide, Polyimide, Polyolefine, Polychloropren, Phenolharze, Ethylenvinylacetate, Melamin-Formaldehyd-Harze und Silicone. Als wässriges Bindemittelsystem können wässrige Bindemittelemulsionen oder -dispersionen der vorstehend genannten Polymere bzw. Bindemittel eingesetzt werden. Es kann sich z.B. um chemisch trocknende oder insbesondere um physikalisch trocknende wässrige Bindemittelsysteme handeln.

Diese bekannten wässrigen Bindemittelsysteme können bevorzugt eingesetzt werden, um Filme bzw. Lackfilme auszubilden, d.h. das wässrige Bindemittelsystem ist bevorzugt ein Beschichtungszusammensetzung oder ein Lack. Wasserbasierte Lacksysteme sind ein besonders geeignetes Anwendungsgebiet für die erfindungsgemäße Verwendung. Diese eignen sich für die Beschichtungen von gegebenenfalls vorbeschichteten Substraten aller Art, z.B. aus Papier, Glas, Metall, Keramik, Holz, Stein oder Kunststoff. Das Substrat kann in jeder Form vorliegen, z.B. als Platte, Folie oder als Oberfläche irgendeines beliebigen Gegenstands. Bevorzugt handelt es sich bei dem wässrigen Bindemittelsystem, das nach Trocknung oder Härtung transparent ist, insbesondere ist es eine wässrige Beschichtungszusammensetzung, die eine transparente Beschichtung ergibt.

Andere mögliche Einsatzgebiete der Bindemittelsysteme sind z.B. als Kleber oder für die Versiegelung. Eine weitere Anwendung finden die wässrigen Bindemittelsysteme als klassische Binder, z.B. in der Textilindustrie, in der wässrige Bindemittelsysteme u.a. bei der Herstellung von sogenannten Non-Wovens, z.B. Vliesstoffen, eingesetzt werden. Dabei werden, vereinfacht gesagt, Textilfasern mit einem Bindemittelsystem zu einem flächigen Textil zusammengeklebt. Wässrige Bindemittelsysteme werden auch bei Nichttextil-Anwendungen eingesetzt, z.B. bei Fasermatten, wie u.a. Steinwolle zur Isolierung.

Bei dem wässrigen Bindemittelsystem kann es sich somit z.B. um einen wässrigen Lack, einen wässrigen Kleber, eine wässrige Versiegelungsmasse oder einen wässrigen Binder handeln, wobei ein wässriger Lack bevorzugt ist. Diese Bindemittelsysteme können neben dem Bindemittel und dem Lösemittel weitere Komponenten enthalten, die gewöhnlich in solchen wässrigen Bindemittelsystemen, wie Lacken, Klebern, Versiegelungsmassen oder Bindern, eingesetzt werden. Die nanoskaligen ZnO-Teilchen können gemäß der Verwendung der Erfindung zum Lack, Kleber, zur Versiegelungsmasse oder zum Binder, die bereits alle gewünschten Komponenten enthalten, zugegeben werden. Die Zugabe der nanoskaligen ZnO-Partikel und der jeweiligen optionalen zusätzlichen Komponenten zum wässrigen Bindemittelsystem ist aber beliebig.

Das wässrige Bindemittelsystem kann neben dem Bindemittel und dem Lösemittel weitere Komponenten enthalten, die gewöhnlich in Bindemittelsystemen eingesetzt werden. Beispiele für solche Komponenten, die für wässrige Bindemittelsysteme, wie z.B. Lacke, Kleber, Versiegelungsmassen oder Binder, insbesondere Lacke geeignet sind, sind Weichmacher, Farbstoffe, Füllstoffe, Pigmente und Hilfsstoffe, wie z.B. Verlaufmittel, Trockenstoffe, Hautverhinderungsmittel, Härtungsbeschleuniger, Benetzungsmittel und Antiabsetzmittel. Der wässrige Lack kann transparent oder farbig sein, d.h. ein Klarlack oder ein pigmentierter Lack.

Die eingesetzten ZnO-Partikel sind nanoskalig. Unter nanoskaligen Partikel werden wie in der Technik üblich Partikel mit einem mittleren Teilchendurchmesser von weniger als 1 µm verstanden. Der mittlere Teilchendurchmesser, auch als d₅₀-Wert bezeichnet, bezieht sich hier auf das Volumenmittel des Teilchendurchmessers. Der mittlere Teilchendurchmesser kann durch ein dynamisches Streulichtverfahren ermittelt werden, z.B. mit dem Messinstrument Nanotrac Particle Size Analyzer von Microtrac Inc., USA. Der mittlere Teilchendurchmesser oder d₅₀-Wert ergibt sich aus der Teilchengrößenverteilung. Der d₅₀-Wert ist so definiert, dass 50 Volumenprozent der Partikel einen Durchmesser aufweisen, der kleiner ist als der d₅₀-Wert. Entsprechend weisen 50 Volumenprozent der Partikel einen Durchmesser auf, der größer als der d₅₀-Wert ist. Analog ist der d₅₀-Wert oder d₉₀-Teilchendurchmesser so definiert, dass 90 Volumenprozent der Partikel einen Durchmesser aufweisen, der kleiner als der d₉₀-Wert ist.

Der mittlere Teilchendurchmesser oder d₅₀-Wert der nanoskaligen ZnO-Teilchen ist unter 1 µm und bevorzugt nicht mehr als 500 nm, besonders bevorzugt nicht mehr als 100 nm. Die nanoskaligen ZnO-Teilchen haben ferner bevorzugt einen d₉₀-Teilchendurchmesser von nicht mehr als 500 nm und besonders bevorzugt nicht mehr als 200 nm.

Nanoskalige ZnO-Teilchen sind bekannt und im Handel erhältlich oder können ohne weiteres durch dem Fachmann bekannte Verfahren hergestellt werden. Das Zinkoxid kann z.B. flammenpyrolytisch, über Fällungsreaktionen oder Sol-Gel-Reaktionen hergestellt werden. Die Zinkoxid-Partikel können aus ZnO bestehen. Die hier eingesetzten Zinkoxid-Partikel umfassen aber auch Partikel aus Zinkoxid, welches eine Dotierung im Kristallgitter enthält, und dotierten Zinkoxiden sowie Partikel, die eine Kern-Schale-Struktur aufweisen, deren Oberfläche bzw. Schale aus Zinkoxid besteht, oder Partikel, die Zinkoxid auf der Oberfläche enthalten. Die ZnO-Partikel können auch wie in der Technik bekannt mit geeigneten Verbindungen, wie z.B. Modifizierungsmitteln, Tensiden oder Stabilisatoren, oberflächenmodifiziert sein. Solche oberflächenmodifizierten oder stabilisierten nanoskaligen ZnO-Pulver oder nanoskaligen ZnO-Dispersionen sind üblich und im Handel erhältlich.

Die nanoskaligen Zinkoxid-Partikel werden dem Bindemittelsystem als Additiv zugegeben, um die genannten Eigenschaftsverbesserungen zu erreichen. Die Zinkoxid-Partikel können als Additiv in beliebiger Form zugesetzt werden, z.B. als Pulver oder in Form einer Dispersion der ZnO-Partikel in einem flüssigen Medium, z.B. Wasser oder einem organischen Lösemittel, wie einem Alkohol, oder einer Mischung davon, wobei ein wässriges flüssiges Medium bevorzugt ist. Das bevorzugte wässrige flüssige Medium kann gegebenenfalls auch organisches Lösemittel enthalten, z.B. weniger als 20 Gew.-%, bevorzugt weniger als 10 Gew.-% und bevorzugter weniger als 5 Gew.-%, bezogen auf das Gesamtgewicht von Wasser und organischem Lösemittel in der wässrigen Dispersion. Die Zugabe der nanoskaligen ZnO-Partikel zum wässrigen Bindemittelsystem kann durch einfaches Einschütten oder Eingießen und Vermischen erfolgen. Gegebenenfalls kann ein nachstehend beschriebenes Dispergierverfahren zur besseren Dispergierung oder Homogenisierung verwendet werden.

Sofern die ZnO-Partikel in Form einer Dispersion zum Bindemittelsystem zugesetzt werden, kann die Menge an ZnO in der Dispersion in weiten Bereichen variieren. Der Gehalt an nanoskaligen ZnO-Teilchen in der Dispersion, bevorzugt einer wässrigen Dispersion, kann z.B. 1 bis 75 Gew.-%, bevorzugt 5 bis 70 Gew.-% und insbesondere 15 bis 65 Gew.-%, bezogen auf das Gesamtgewicht der wässrigen Dispersion, betragen.

Die ZnO-Partikel oder die ZnO-Partikel enthaltende Dispersion, die als Additiv zum Bindemittelsystem zugesetzt werden soll, kann ferner weitere, an sich bekannte Hilfsstoffe enthalten, um nach Bedarf weitere Eigenschaften des Additivs oder des Bindemittelsystems in geeigneter Weise einzustellen. Beispiele für solche Hilfsstoffe sind Ethylenglycol und Derivate davon, Propylenglycol und Derivate davon, Glycerin und Derivate davon, Entschäumungsmittel, Verlaufsadditive, Verdicker, Rheologieadditive, Benetzungshilfsmittel, Konservierungsmittel und Korrosionsschutzmittel.

Zur Herstellung der Dispersion der nanoskaligen ZnO-Partikel in einem flüssigem Medium können bekannte Dispergierverfahren bzw. Dispergiervorrichtungen eingesetzt werden, z.B. Rotor-Stator-Systeme, Ultraschall oder Walzwerke. Solche Dispergierverfahren und geeignete Dispergiervorrichtungen werden z.B. in der WO 2004/069400 (DE 10304849 A1) beschrieben, worauf hiermit Bezug genommen wird.

Die ZnO-Partikel können z.B. mit einer Dispergiervorrichtung in einem flüssigen Medium, bevorzugt einem wässrigen Medium, dispergiert werden. Geeignete Dispergiervorrichtungen sind z.B. Mühlen, Knetern, Walzenstühlen, Düsenstrahldispergatoren, insbesondere Homogenisatoren, Turborührer, Mühlen mit losen Mahlkörpern, insbesondere Rührwerkskugelmühlen, Scherwalzenkneter, Mörsermühlen, Kolloidmühlen und Walzenstühle. Gut geeignet sind Mühlen, insbesondere Rührwerkskugelmühlen, mit sehr kleinen Mahlkörpern, z.B. Mahlkörper mit einem Durchmesser von nicht mehr als 2,5 mm, bevorzugter nicht mehr als 1,5 mm und besonders bevorzugt nicht mehr als 1,0 mm und nicht kleiner als 0,005 mm, bevorzugt nicht kleiner als 0,02 mm, bevorzugter nicht kleiner als 0,05 mm verwendet.

Durch die Dispergierbehandlung kann auch eine Vermahlung bzw. Zerkleinerung der ZnO-Partikel erfolgen, so dass die nanoskaligen ZnO-Partikel der gewünschten Größe erst durch die Dispergierbehandlung gebildet werden. Daher können die als Ausgangsprodukte eingesetzten ZnO-Partikel größer sein als die nach der Dispergierbehandlung erhaltenen.

Der Anteil an nanoskaligen ZnO-Partikeln in dem wässrigen Bindemittelsystem kann in weiten Bereichen variierten. Der Anteil an den nanoskaligen ZnO-Partikeln in dem wässrigen Bindemittelsystem kann z.B. im Bereich von 0,01 bis 10 Gew.-%, bevorzugt 0,1 bis 5 Gew.-% und bevorzugter 0,1 bis 2 Gew.-%, bezogen auf den Feststoffgehalt des wässrigen Bindemittelsystems, liegen.

Der Zusatz der nanoskaligen ZnO-Partikel, bevorzugt in Form einer wässrigen Dispersion, zum wässrigen Bindemittelsystem führt wie bereits vorstehend erläutert zur Erhöhung der Blockfestigkeit des getrockneten oder gehärteten Bindemittelsystems und/oder zur Verringerung der Trockenzeit des Bindemittelsystems und/oder zur Verbesserung der Beständigkeit des getrockneten oder gehärteten Bindemittelsystems gegen Chemikalien, Detergenzien, Wärme, Bewitterung oder biologischen Befall. Besonders gute Ergebnisse wurden erzielt, wenn als Zinkoxid-Partikel Partikel eingesetzt wurden, die an der Oberfläche mit Phosphonocarbonsäure modifiziert wurden. Überraschenderweise wurde beim Einsatz von mit Phosphonocarbonsäure modifizierten ZnO-Partikeln auch eine verringerte Trübung beobachtet, die bei üblichen ZnO-Partikeln häufig zu beobachten ist. Dies ist z.B. bei transparenten Lacken und allgemein bei allen Anwendungen, bei denen die Optik eine Rolle spielt, vorteilhaft. Außerdem können verglichen mit herkömmlichen ZnO-Dispersionen stabilere ZnO-Dispersionen und gegebenenfalls mit kleinerem mittlerem Teilchendurchmesser erhalten werden. Der Einsatz dieser mit Phosphonocarbonsäure modifizierten ZnO-Partikel ist daher bevorzugt. Solche mit Phosphonocarbonsäure modifizierten ZnO-Partikel sind im Stand der Technik bislang noch nicht beschrieben und ein Aspekt der vorliegenden Erfindung. Sie werden daher im folgenden näher erläutert.

Für die mit Phosphonocarbonsäure modifizierten nanoskaligen ZnO-Partikel gelten alle vorstehend genannten Angaben genauso, z.B. zu den nanoskaligen ZnO-Partikel, den nanoskalige ZnO-Partikel enthaltenden Dispersionen, zu deren Verwendung und den wässrigen Bindemittelsystemen, dem Anteil an nanoskaligen ZnO-Partikeln in dem wässrigen Bindemittelsystem usw. Die ZnO-Partikel sind aber außerdem an der Oberfläche mit Phosphonocarbonsäure, einem Salz der Phosphonocarbonsäure oder einer Mischung davon modifiziert bzw. beschichtet. Die auf diese Weise erhaltenen modifizierten ZnO-Partikel werden in dieser Beschreibung manchmal auch vereinfacht als mit Phosphonocarbonsäure modifizierte ZnO-Partikel bezeichnet.

Die Phosphonocarbonsäure ist 2-Phosphono-1,2,4-butantricarbonsäure (PBTC) und deren Salze. 2-Phosphono-1,2,4-butantricarbonsäure und deren Salze sind im Handel erhältlich. Beispielsweise werden eine 50%-ige wässrige Lösung von 2-Phosphono-1,2-4-butantricarbonsäure (Bayhibit^{®} AM) oder das Tetranatriumsalz der 2-Phosphono-1,2,4-butantricarbonsäure (Bayhibit^{®} S) von der Lanxess AG vertrieben.

Die Phosphonocarbonsäure wird als Mischung der Phosphonocarbonsäure und eines Salzes der Phosphonocarbonsäure eingesetzt.

Da es sich bei den Phosphonocarbonsäuren um zwei- oder mehrbasische Säuren handelt, sind verschiedene Salze möglich. Es kann sich z.B. um ein Salz handeln, in dem alle Säuregruppen neutralisiert sind, oder ein Salz, bei dem nur ein Teil der Säuregruppen neutralisiert ist. Es wird eine Mischung von Phosphonocarbonsäure und einem oder mehreren Salzen von einer oder mehreren konjugierten Basen der Phosphonocarbonsäure verwendet, wobei das Verhältnis von Phosphonocarbonsäure und Salz der Phosphonocarbonsäure geeigneterweise so ist, dass 2% bis 75% aller Säuregruppen der Phosphonocarbonsäure neutralisiert sind und in Form der konjugierten Base bzw. als Salz vorliegen und entsprechend 98% bis 25% aller Säuregruppen der Phosphonocarbonsäure in der Säureform vorliegen.

Es kann ein im Handel erhältliches Salz einer Phosphonocarbonsäure verwendet werden. Ein Salz kann auch ohne weiteres aus einer Phosphonocarbonsäure durch Zugabe einer geeigneten Base gebildet werden. In der Regel erfolgt die Neutralisation mit der Base bevorzugt in einem Lösemittel, z.B. in Wasser, einem organischen Lösemittel oder einer Mischung davon. Bevorzugt wird Wasser oder eine wässrige Flüssigkeit als Lösemittel verwendet. Das gebildete Salz kann isoliert werden, in der Regel ist es aber zweckmäßig die so gebildete Lösung des Salzes direkt für die Umsetzung mit den nanoskaligen ZnO-Partikeln zu verwenden. Es ist auch denkbar, zuerst die nanoskaligen ZnO-Partikeln mit der Phosphonocarbonsäure zu mischen und anschließend die Base in geeigneter Menge zuzugeben.

Es werden Basen verwendet, die einwertige Kationen beinhalten bzw. bilden, wobei Alkali- und Ammoniumkationen besonders bevorzugt sind. Alkalikationen sind Li-, Na, K-, Rb- und Cs-Kationen. Geeignete Basen sind z.B. NaOH, KOH, Ammoniakwasser, primäre, sekundäre, tertiäre Amine, wie z.B. Triethanolamin, und quartäre Ammoniumverbindungen, wie z.B. Tetramethylammoniumhydroxid. Dementsprechend sind die Salze der Phosphonocarbonsäure Salze mit einwertigen Kationen, besonders bevorzugt Alkali- und Ammoniumsalze, bevorzugter Na-, K- oder Ammoniumsalze.

Wie vorstehend erläutert, werden Mischungen von Phosphonocarbonsäure und Salzen der Phosphonocarbonsäure eingesetzt. Zur Herstellung können Phosphonocarbonsäure und Salz der Phosphonocarbonsäure als Ausgangsprodukte in geeignetem Verhältnis gemischt werden. Die Mischung kann auch durch Zugabe einer geeigneten Menge an Base zu einer Phosphonocarbonsäure erhalten werden, so dass das Salz "in situ" gebildet wird. Man kann auch von einem Salz der Phosphonocarbonsäure ausgehen und durch Zugabe einer geeigneten Menge an Säure, z.B. Salzsäure, Schwefelsäure oder Essigsäure, die entsprechende Phosphonocarbonsäure "in situ" bilden. Der Fachmann kann solche Mischungen von Phosphonocarbonsäure und Salzen der Phosphonocarbonsäure im gewünschten Verhältnis ohne weiteres herstellen.

Wie bereits angegeben werden Mischungen von PBTC und Salzen von PBTC zur Modifizierung der ZnO-Partikel verwendet. Bei den Salzen von PBTC handelt es sich bevorzugt um Salze von einwertigen Kationen, insbesondere um Alkali- und Ammoniumsalze, wobei Na-, K- und Ammoniumsalze besonders bevorzugt sind.

Bei den eingesetzten Mischungen von PBTC und Salzen von PBTC mit einwertigen Kationen M⁺, wobei M⁺ bevorzugt Alkali oder Ammonium ist, oder den Salzen von PBTC ist das Molverhältnis von M⁺: PBTC im Bereich von 0,1:1 bis 3:1 und besonders bevorzugt von 0,1:1 bis 1,8:1. Solche Mischungen können z.B. durch Reaktion der entsprechenden Basen mit PBTC oder durch Mischung bzw. Umsetzung von PBCT mit dem Tetraalkali- oder Tetraammoniumsalz der 2-Phosphono-1,2,4-butantricarbonsäure erhalten werden.

Der genaue Mechanismus der Anbindung der Phosphonocarbonsäure oder der Salze davon zur Oberflächenmodifizierung der ZnO-Partikel mit Phosphonocarbonsäure oder deren Salzen ist nicht im Einzelnen bekannt. Ohne sich an eine Theorie binden zu wollen, wird aber vermutet, dass die Phosphonocarbonsäure oder deren Salz über die Phosphonatfunktion, allein oder zusammen mit einer Carboxylatfunktion, einen Komplex mit Oberflächengruppen auf den ZnO-Partikeln bildet. Es könnte alternativ oder zusätzlich auch möglich sein, dass sich mit Zinkionen ein Komplex mit der Phosphonocarbonsäure oder deren Salz bildet, die bzw. das dann auf der Oberfläche der ZnO-Partikel koordinativ gebunden ist.

Die nanoskaligen ZnO-Partikel, die an der Oberfläche mit Phosphonocarbonsäure, einem Salz der Phosphonocarbonsäure oder einer Mischung davon modifiziert sind, werden durch Umsetzung von Phosphonocarbonsäure, einem Salz der Phosphonocarbonsäure oder einer Mischung davon mit ZnO-Partikeln erhalten. Die Umsetzung kann ohne ein Lösemittel erfolgt, wird aber zweckmäßigerweise in einem Lösemittel ausgeführt. Als Lösemittel kann das vorstehend beschriebene flüssige Medium, bevorzugt das wässrige flüssige Medium, zur Herstellung der Dispersion der ZnO-Partikel eingesetzt werden, so dass auf die dortigen Angaben verwiesen wird. Die Mischreihenfolge der Komponenten ist dabei beliebig.

Das Verhältnis von Phosphonocarbonsäure und Phosphonocarbonsäuresalz zu ZnO-Partikel kann in weiten Bereichen variieren, liegt aber z.B. zweckmäßigerweise im Bereich von 0,005 mmol bis 10 mmol Phosphonocarbonsäure und Phosphonocarbonsäuresalz pro g Zinkoxid, bevorzugt im Bereich von 0,01 bis 8 mmol Phosphonocarbonsäure und Phosphonocarbonsäuresalz pro g Zinkoxid und bevorzugter von 0,05 bis 1 mmol Phosphonocarbonsäure und Phosphonocarbonsäuresalz pro g Zinkoxid.

In einer zweckmäßigen Ausführungsform kann z.B. zunächst Phosphonocarbonsäure, ein Salz einer Phosphonocarbonsäure oder eine Mischung von Phosphonocarbonsäure und Salz der Phosphonocarbonsäure in dem flüssigen Medium wie vorstehend erläutert vorgelegt oder gebildet werden. Hierzu werden ZnO-Partikel, entweder als Dispersion oder bevorzugt als Pulver, zugesetzt. Die Mischung wird dann vorzugsweise einem Dispergierverfahren unterworfen.

Es können die vorstehend genannten Dispergierverfahren bzw. Dispergiervorrichtungen zur Herstellung der Dispersion der nanoskaligen ZnO-Partikel in gleicher Weise eingesetzt werden, so dass auf die vorstehenden Angaben verwiesen wird. Der einzige Unterschied besteht in der zusätzlichen Verwendung der Phosphonocarbonsäurekomponente. Die Modifizierung der ZnO-Partikel durch die Phosphonocarbonsäure, einem Salz der Phosphonocarbonsäure oder einer Mischung davon an der Oberfläche erfolgt in der Regel schon bei Raumtemperatur (20°C) und wird durch die Dispergierbehandlung unterstützt. Die Umsetzung kann bei Bedarf auch bei höheren Temperaturen durchgeführt werden.

Es ist bevorzugt, für die Dispergierbehandlung der ZnO-Partikel in einem flüssigen Medium in Anwesenheit der Phosphonocarbonsäure, einem Salz der Phosphonocarbonsäure oder einer Mischung davon in einer Mühle, bevorzugt einer Rührwerkskugelmühle, mit sehr kleinen Mahlkörpern, z.B. Mahlkörper mit einem Durchmesser von nicht mehr als 2,5 mm, bevorzugter nicht mehr als 1,5 mm und besonders bevorzugt nicht mehr als 1,0 mm und nicht kleiner als 0,005 mm, bevorzugt nicht kleiner als 0,02 mm, bevorzugter nicht kleiner als 0,05 mm durchzuführen. Auf diese Weise wird gleichzeitig eine sehr schnelle Dispergierung und Modifizierung der ZnO-Partikel erreicht und eine äußerst stabile Dispersion erhalten.

Da es wie oben erläutert durch die Dispergierbehandlung auch zu einer Vermahlung oder Zerkleinerung der ZnO-Partikel kommen kann, können die als Ausgangsprodukte verwendeten ZnO-Partikel auch einen größeren mittleren Teilchendurchmesser aufweisen als die nach der Dispergierbehandlung erhaltenen mit Phosphonocarbonsäure modifizierten, nanoskaligen ZnO-Partikel. Es ist aber in der Regel bevorzugt, nanoskalige ZnO-Partikel als Ausgangsprodukte zu verwenden.

Die erhaltene Dispersion kann als solche verwendet werden. Überraschenderweise ist diese Dispersion weitgehend klar, eine Trübung kann nicht festgestellt werden. Durch Abtrennung des flüssigen Mediums durch ein übliches Verfahren, z.B. Zentrifugation oder Abdampfen, können die mit Phosphonocarbonsäure modifizierten, nanoskaligen ZnO-Partikel in Pulverform erhalten werden.

Wie vorstehend erläutert können die mit Phosphonocarbonsäure modifizierten, nanoskaligen ZnO-Partikel, als Dispersion oder als Pulver, zur Erhöhung der Blockfestigkeit und/oder zur Verringerung der Trockenzeit von wässrigen Bindemittelsystemen und/oder zur Erhöhung der Beständigkeit wie oben erläutert verwendet werden. Sie können darüber hinaus auch für alle Anwendungen eingesetzt werden, für die die Verwendung von nanopartikulärem Zinkoxid bekannt ist. So können die mit Phosphonocarbonsäure modifizierten, nanoskaligen ZnO-Partikel gemäß der Erfindung z.B. auch als Vulkanisationsaktivator für die Vulkanisation von Latex-Formkörpern, als UV-Schutz, als Katalysator, zur Herstellung optischer Systeme, zur Herstellung elektronischer Bauteile oder zur Veränderung optischer oder elektronischer Eigenschaften von Substraten oder Bulkmaterialien verwendet werden.

Die Erfindung wird im folgenden durch Beispiele weiter erläutert, die den Umfang der vorliegenden Erfindung aber nicht beschränken sollen.

### Beispiel 1

397,49 g einer 2-Phosphono-1,2,4-butantricarbonsäure-Lösung (Bayhibit AM, Massenanteil 50 %, Lanxess AG) wurden mit 29,55 g NaOH versetzt. Es wurde eine Lösung mit einem pH-Wert von 2,5 erhalten. Diese wurde mit 2562,96 g H₂O versetzt und gerührt. Anschließend wurden unter Rühren 2000 g ZnO (Microsun Zinc Oxide P99/30, Micronisers Pty Ltd) zugegeben. Die so erhaltene Suspension wurde in einer Rührwerkskugelmühle (Drais PML-H/V) mit Zirkonoxid-Mahlkugeln (YZT, Tosoh), die einen Durchmesser zwischen 0,3-0,4 mm aufweisen, in einem kontinuierlichen Kreislauf 615 min vermahlen. Es wurde eine Zinkoxid-Dispersion erhalten, die einen mittleren Partikeldurchmesser (d₅₀) von 52 nm und einen d₉₀-Wert (Volumenverteilung) in der Partikelgrößenverteilung von 93 nm besitzt. Die Dispersion war mehrere Monate lagerstabil.

### Beispiel 2

369,02 g einer 2-Phosphono-1,2,4-butantricarbonsäure-Lösung (Bayhibit AM, Massenanteil 50 %, Lanxess AG) wurden mit 163,37 g des Tetranatriumsalzes der 2-Phosphono-1,2,4-butantricarbonsäure (Bayhibit S, Lanxess AG) versetzt. Danach wurden 4922 g H₂O zugegeben und so lange gerührt, bis eine Lösung entstanden war. Anschließend wurden unter Rühren 5000 g ZnO (Microsun Zinc Oxide P99/30, Micronisers Pty Ltd) zugegeben. Die so erhaltene Suspension wurde in einer Rührwerkskugelmühle (Drais PML-H/V) mit Zirkonoxid-Mahlkugeln (YZT, Tosoh), die einen Durchmesser zwischen 0,3-0,4 mm aufweisen, in einem kontinuierlichen Kreislauf 1035 min vermahlen. Es wurde eine Zinkoxid-Dispersion erhalten, die einen mittleren Partikeldurchmesser (d₅₀) von 47 nm und einen d₉₀-Wert (Volumenverteilung) in der Partikelgrößenverteilung von 88 nm besitzt. Die Dispersion war mehrere Monate lagerstabil.

### Beispiel 3

125,05 g einer 2-Phosphono-1,2,4-butantricarbonsäure-Lösung (Bayhibit AM, Massenanteil 50 %, Lanxess AG) wurden mit 12,65 g KOH versetzt. Danach wurden 1216 g H₂O zugegeben und so lange gerührt, bis eine Lösung entstanden war. Anschließend wurden unter Rühren 1250 g ZnO (Microsun Zinc Oxide P99/30, Micronisers Pty Ltd) zugegeben. Die so erhaltene Suspension wurde in einer Rührwerkskugelmühle (Drais PML-H/V) mit Zirkonoxid Mahlkugeln (YZT, Tosoh), die einen Durchmesser zwischen 0,3-0,4 mm aufweisen, in einem kontinuierlichen Kreislauf 250 min vermahlen. Es wurde eine Zinkoxid-Dispersion erhalten, die einen mittleren Partikeldurchmesser (d₅₀) von 56 nm und einen d₉₀-Wert (Volumenverteilung) in der Partikelgrößenverteilung von 100 nm besitzt. Die Dispersion war mehrere Monate lagerstabil.

### Beispiel 4

246 g einer 2-Phosphono-1,2,4-butantricarbonsäure-Lösung (Bayhibit AM, Massenanteil 50 %, Lanxess AG) wurden mit 18,11 g NaOH versetzt. Es wurde eine Lösung mit einem pH-Wert von 2,5 erhalten. Diese wurde mit 2230 g H₂O versetzt und gerührt. Anschließend wurden unter Rühren 2500 g ZnO (Microsun Zinc Oxide P99/30, Micronisers Pty Ltd) zugegeben. Die so erhaltene Suspension wurde in einer Rührwerkskugelmühle (Drais PML-H/V) mit Zirkonoxid-Mahlkugeln (YZT, Tosoh), die einen Durchmesser zwischen 0,3-0,4 mm aufweisen, in einem kontinuierlichen Kreislauf 600 min vorgemahlen. Anschließend wurde die Dispersion in einer Rührwerkskugelmühle (MicroMedia MMP1, Bühler AG) mit Zirkonoxid-Mahlkugeln (YZT, Tosoh), die einen Durchmesser zwischen 0,1-0,2 mm aufweisen, in einem kontinuierlichen Kreislauf 100 min vermahlen. Es wurde eine Zinkoxid-Dispersion erhalten, die einen mittleren Partikeldurchmesser (d₅₀) von 46 nm und einen d₉₀-Wert (Volumenverteilung) in der Partikelgrößenverteilung von 76 nm besitzt. Nach Lagerung der Dispersion bei 40°C über 9 Monate änderte sich der (d₅₀) 48 nm und der d₉₀ Wert auf 80 nm, was im Rahmen der Messungenauigkeit liegt. Bei 70 °C änderte sich die Partikelgrößenverteilung innerhalb von 3 Monaten auf einen d₉₀-Wert auf 107 nm.

### Beispiel 5

Für das Beispiel 5 wurden Mischungen von Additiven und einer Lack-Formulierung auf Acrylatbasis (s. Tabelle 1) hergestellt, so dass in der trockenen Schicht insgesamt 0,9 Gew.-% ZnO-Additiv enthalten waren (s. Tabelle 2 und Tabelle 3). Die verwendete ZnO-Dispersion war die mit Phosphonocarbonsäure modifizierte ZnO-Dispersion gemäß Beispiel 1 und besaß einen Feststoffgehalt von 40 %. Die zu untersuchenden Lacke wurden zum einen mit einer Nassschichtdicke von 400 µm auf Kunststoff-Folien (Leneta®-Folien, Belastung mit 2,5-kg-Massestück), zum anderen in drei Schichten mit einem Verbrauch von jeweils ca 100 g/m² auf Holzprobenkörper (Dreischichtplatten aus Fichtenholz, Belastung mit 7-kg-Massestück) aufgetragen. Die Prüfung wurde nach einer Trockenzeit von 2 Tagen vorgenommen. Die Verblockungsprüfung der hergestellten Lacke erfolgte gemäß Richtlinie 6 "Verblockung von Anstrichsystemen auf Holzfenstern" (03/99) des Institutes für Fenstertechnik e.V., Rosenheim. Zum Vergleich wurde die gleiche Mischung aber ohne ZnO-Additiv geprüft.

**Tabelle 1: Zusammensetzung der verwendeten Lack-Formulierung 1 ohne ZnO-Additiv**

| Zugabeschritt | Inhaltsstoff | Masse [g] |
|---|---|---|
| 1. | Primal AC-337 ER | 195,00 |
| 2. | Tego Foamex 825 | 0,60 |
| 3. | Wasser | 30,00 |
| 4. | Texanol | 6,90 |
| 5. | Ammoniak-Lsg 25% | 0,78 |
| 6. | Wasser | 60,00 |
| 7. | Acrysol RM-12W | 2,01 |
| 8. | Wasser | 0,30 |

**Tabelle 2: Ergebnisse für die Verblockungstests auf Kunststoff-Folie**

| Nr. | Lack-system | Additiv | Additivgehalt (Masse-anteil in trockener Schicht) /% | Verblockungskennzahl | |
|---|---|---|---|---|---|
| | | | | nach Feuchtebelastung | nach Temperaturbelastung |
| 1 | 1 | ZnO | 0,9 | 1 | 1-2 |
| 2 | 1 | -- | -- | 2-3 | 5 |

**Tabelle 3: Ergebnisse für die Verblockungstests auf Holz**

| Nr. | Lacksystem | Additiv | Additivgehalt (Masseanteil in trockener Schicht) /% | Verblockungskennzahl | |
|---|---|---|---|---|---|
| | | | | nach Feuchtebelastung | nach Temperaturbelastung |
| 3 | 1 | ZnO | 0,9 | 2 | 2 |
| 4 | 1 | -- | -- | 5 | 5 |

Die Ergebnisse in Tabelle 2 und 3 zeigen, dass der Einsatz von nanoskaligen ZnO-Partikeln im untersuchten Lack die Blockfestigkeit verbessert. Die Kennzahl für Blockfestigkeit auf Kunststofffolie wird nach Feuchtebelastung von 2-3 auf 1 und nach Temperaturbelastung von 5 auf 1-2 verbessert. Die Ergebnisse in Tabelle 3 zeigen, dass die Kennzahl für Blockfestigkeit nach Feuchtebelastung und nach Temperaturbelastung von 5 auf 2 durch den Einsatz von nano ZnO-Partikeln verbessert.

### Beispiel 6

Es wurden Mischungen von Additiven und einer Lack-Formulierung auf Acrylatbasis (s. Tabelle 4) hergestellt, so dass in der trockenen Schicht insgesamt 0,9 % ZnO-Additiv enthalten waren (s. Tabelle 4). Die PBTC-ZnO-Dispersion wurde gemäß Beispiel 1 hergestellt und wies einen Feststoffgehalt von 40 % auf. Ferner wurden im Handel erhältliche nanoskalige ZnO-Dispersionen (Nanobyk^{®} 3840 von Byk (ZnO-Byk) und Zano^{®} W-084 von Umicore (Zano W-084)) in der gleichen Konzentration eingesetzt. Als Vergleich wurde dieselbe Lack-Formulierung aber ohne ZnO-Dispersion geprüft.

Die mit den Additiven versehenen Polymerdispersionen wurden homogenisiert und auf Glasplatten aufgerakelt wobei eine Nassfilmdicke von 100 µm erzielt wurde. Die Nassfilme wurden bei Raumtemperatur getrocknet. Die Trocknungsdauer bis zum Trocknungsgrad 4 wurde nach DIN 53150 bestimmt. Die Trocknungsdauer bis zum Trocknungsgrad 4 (s. Tabelle 4) wird durch den Einsatz von ZnO von über 48 h auf 20 h reduziert.

**Tabelle 4: Ergebnisse der Messung der Trocknungsdauer**

| Nr. | Lacksystem | Additiv | Additivgehalt | Trocknungsdauer bis zum Trocknungsgrad 4 /h |
|---|---|---|---|---|
| | | | (Massenanteil in trockener Schicht) /% | |
| 5 | 1 | ZnO-PBTC | 0,9 | 20 h |
| 6 | 1 | ZnO-Byk | 0,9 | 20 h |
| 7 | 1 | Zano W-084 | 0,9 | 20 h |
| 8 | 1 | - | - | >48 h |

### Beispiel 7

222,47 g einer 2-Phosphono-1,2,4-butantricarbonsäure-Lösung (Bayhibit AM, Massenanteil 50 %, Lanxess AG) wurden mit 22,03 g des Tetranatriumsalzes der 2-Phosphono-1,2,4-butantricarbonsäure (Bayhibit S, Lanxess AG), 34,10 g Triethanolamin und 2,50 g Natriumhydroxid versetzt. Danach wurden 3147,4 g H₂O zugegeben und so lange gerührt, bis eine Lösung entstanden war. Anschließend wurden unter Rühren 2571 g ZnO (Zano 30, Umicore) zugegeben. Die so erhaltene Suspension wurde in einer Rührwerkskugelmühle (Drais PML-H/V) mit Zirkonoxid-Mahlkugeln (YZT, Tosoh), die einen Durchmesser zwischen 0,3-0,4 mm aufweisen, in einem kontinuierlichen Kreislauf 280 min vorgemahlen. Anschließend wurde die Dispersion in einer Rührwerkskugelmühle (MicroMedia MMP1, Bühler AG) mit Zirkonoxid-Mahlkugeln (YZT, Tosoh), die einen Durchmesser zwischen 0,1-0,2 mm aufweisen, in einem kontinuierlichen Kreislauf 90 min vermahlen. Es wurde eine Zinkoxid-Dispersion erhalten, die einen mittleren Partikeldurchmesser (d₅₀) von 49 nm und einen d₉₀-Wert (Volumenverteilung) in der Partikelgrößenverteilung von 89 nm besitzt.

### Beispiel 8

Zu 4300 g H₂O wurden 625,34 g einer 2-Phosphono-1,2,4-butantricarbonsäure-Lösung (Bayhibit AM, Massenanteil 50 %, Lanxess AG) und 46,41 g Natriumhydroxid gegeben. Danach so lange gerührt bis eine Lösung entstanden war. Anschließend wurden unter Rühren 5000 g ZnO (Activox R 50, Rockwood Pigments UK Durham) zugegeben. Die so erhaltene Suspension wurde in einer Rührwerkskugelmühle (Drais PML-H/V) mit Zirkonoxid-Mahlkugeln (YZT, Tosoh), die einen Durchmesser zwischen 0,3-0,4 mm aufweisen, in einem kontinuierlichen Kreislauf 47 min vorgemahlen. Anschließend wurde die Dispersion in einer Rührwerkskugelmühle (MicroMedia MMP1, Bühler AG) mit Zirkonoxid-Mahlkugeln (YZT, Tosoh), die einen Durchmesser zwischen 0,1-0,2 mm aufweisen, in einem kontinuierlichen Kreislauf 265 min vermahlen. Es wurde eine Zinkoxid-Dispersion erhalten, die einen mittleren Partikeldurchmesser (d₅₀) von 64 nm und einen d₉₀-Wert (Volumenverteilung) in der Partikelgrößenverteilung von 98 nm besitzt.

### Beispiel 9

Zu 1300 g H₂O wurden 100,17 g einer 2-Phosphono-1,2,4-butantricarbonsäure-Lösung (Bayhibit AM, Massenanteil 50 %, Lanxess AG) und 67,71 g einer 25%igen Tetramethylammoniumhydroxidlösung gegeben. Anschließend wurden unter Rühren 1000 g ZnO (Zano 30, Umicore) zugegeben. Die so erhaltene Suspension wurde in einer Rührwerkskugelmühle (Drais PML-H/V) mit Zirkonoxid-Mahlkugeln (YZT, Tosoh), die einen Durchmesser zwischen 0,3-0,4 mm aufweisen, in einem kontinuierlichen Kreislauf 360 min gemahlen. Es wurde eine Zinkoxid-Dispersion erhalten, die einen mittleren Partikeldurchmesser (d₅₀) von 56 nm und einen d₉₀-Wert (Volumenverteilung) in der Partikelgrößenverteilung von 112 nm aufweist.

### Beispiel 10

Zu 1000 g H₂O wurden 36 g Phosphonoessigsäure (Sigma-Aldrich) und 8,08 g Natriumhydroxid gegeben. Anschließend wurden unter Rühren 1000 g ZnO (Zano 30, Umicore) zugegeben. Die so erhaltene Suspension wurde in einer Rührwerkskugelmühle (Drais PML-H/V) mit Zirkonoxid-Mahlkugeln (YZT, Tosoh), die einen Durchmesser zwischen 0,3-0,4 mm aufweisen, in einem kontinuierlichen Kreislauf 160 min gemahlen. Es wurde eine Zinkoxid-Dispersion erhalten, die einen mittleren Partikeldurchmesser (d₅₀) von 70 nm und einen d₉₀-Wert (Volumenverteilung) in der Partikelgrößenverteilung von 166 nm aufweist.

### Beispiel 11

Für die Messung der UV/Vis-Transmission wurden Mischungen aus einem Acrylatbinder und unterschiedlichen ZnO-Dispersionen hergestellt. Hierfür wurde die oberflächenmodifizierte ZnO-Dispersion gemäß Beispiel 2 und im Handel erhältliche nanoskalige ZnO-Dispersionen (Nanobyk^{®} 3840 und Zano W-084) verwendet. Als physikalisch härtendes Acrylatsystem wurde eine Mischung aus 200,3 g Revertex^{®} LS 1032-1 Binder und 12,8 g Texanol verwendet. Die ZnO-Dispersionen wurden mit der Binder/ Texanol-Mischung in dem in Tabelle 5 angegebenen Verhältnis gemischt, mit einer Rakel auf Glasplatten aufgetragen und bei Raumtemperatur getrocknet Es wurden Schichten mit einer durchschnittlichen Dicke von ca. 55 µm erhalten. Die Transmission wurde im UV/Vis-Spektrometer (UV-2401PC, Shimadzu) gegen eine Vergleichsprobe, welche kein Zinkoxid enthielt, im Wellenlängenbereich von 350 - 800 nm gemessen.

**Tabelle 5 Zusammensetzung der untersuchten Schichten.**

| ZnO | Menge Acrylatbinder (g) | Menge ZnO-Dispersion (g) | Menge Acrylat in trockenem Film (%) | Menge ZnO in trocken em Film (%) | 98 % Transmission erreicht bei (nm) |
|---|---|---|---|---|---|
| gemäß Beispiel 2 | 20,0 | 0,36 | 98,2 | 1,8 | 589 |
| Zano W-084 | 20,0 | 0,35 | 98,2 | 1,8 | 619 |
| Nanobyk 3840 | 20,0 | 0,43 | 98,2 | 1,8 | kleiner 98% im untersuchten Wellenlängenbereich |

Hierbei wurde festgestellt, dass mit dem erfindungsgemäßen oberflächenmodifizierten ZnO gemäß Beispiel 2 eine 98% Transmission bei einer Wellenlänge von 589 nm erreicht wurde. Im Vergleich zeigte sich, dass die Probe mit Zano W-084 erst bei einer Wellenlänge von 619 nm eine Transmission von 98% erreicht. Die Vergleichsprobe mit Nanobyk 3840 zeigte keine Transmission von über 98% im untersuchten Wellenlängenbereich.

### Beispiel 12

Es wurde Mischungen von Additiven und Revertex LS-1032-1 (Acrylatpolymerdispersion in Wasser) hergestellt, so dass in der trockenen Schicht insgesamt 1 % anorganische Additive enthalten waren (s. Tabelle 6). Als Verlaufsadditiv wurden 6 % (m/m, bezogen auf die Polymerdispersion) Texanol zu der hergestellten Dispersion gegeben. Der Feststoffgehalt der SiO₂-Dispersion (Levasil 300/30) betrug 30 %, die ZnO-Dispersion (hergestellt aus ZnO der Firma Microsun, Zinc Oxide P99/30) besaß einen Feststoffgehalt von 46 %.

Die mit den Additiven versehenen Polymerdispersionen wurden homogenisiert und auf Glasplatten aufgerakelt, wobei eine Nassfilmdicke von 100 µm erzielt wurde. Die Nassfilme wurden bei 70°C für 30 Minuten getrocknet. Die so hergestellten Filme auf den Glasplatten wurden nach EN 13523-11 einem Test auf Beständigkeit gegen MEK unterzogen. In Tabelle 6 findet sich die Anzahl der Doppelhübe, nach dem die Schicht auf der Glasplatte durchgängig zerstört war.

**Tabelle 6: Zusammensetzung der Lackproben für Beispiel 12**

| Lacksystem | Additiv | Additivgehalt (Masse in trockener Schicht) /% | Anzahl Doppelhübe MEK |
|---|---|---|---|
| Revertex LS-1032-1 | ZnO | 1 | 68 |
| Revertex LS-1032-1 | SiO₂ | 1 | 39 |
| Revertex LS-1032-1 | - | - | 27 |

### Beispiel 13

Es wurden Mischungen von Additiven und einer Lack-Formulierung auf Acrylatbasis hergestellt, so dass in der trockenen Schicht insgesamt 0,9 % Additive enthalten waren. Der Feststoffgehalt der SiO₂-Dispersion (hergestellt aus Aerosil® 8200) betrug 15 %, die ZnO-Dispersion (hergestellt aus ZnO der Firma Microsun, Zinc Oxide P99/30) besaß einen Feststoffgehalt von 40 %.

Als organisches Vergleichsadditiv wurde Aquacer^{®} 535 (Byk^{®}) verwendet, welches ebenfalls zur Verbesserung der Oberflächeneigenschaften eingesetzt wird. Die mit den Additiven versehenen Polymerdispersionen wurden homogenisiert und auf Glasplatten aufgerakelt, wobei eine Nassfilmdicke von 100 µm erzielt wurde. Die Nassfilme wurden bei Raumtemperatur getrocknet. Der mit der wässrigen Dispersion hergestellte Film auf der Glasplatte wurden nach EN 13523-11 einem Test auf Beständigkeit gegen MEK unterzogen. In Tabelle 8 findet sich die Anzahl der Doppelhübe, nachdem die Schicht auf der Glasplatte durchgängig zerstört war.

**Tabelle 7: Zusammensetzung der verwendeten Lack-Formulierung "HBST337"**

| Zugabeschritt | Inhaltsstoff | Menge /g |
|---|---|---|
| 1. | Primal AC-337 ER | 195,00 |
| 2. | Tego Foamex 825 | 0,60 |
| 3. | Wasser | 30,00 |
| 4. | Texanol | 6,90 |
| 5. | Ammoniak-Lsg 25% | 0,78 |
| 6. | Wasser | 60,00 |
| 7. | Acrysol RM-12W | 2,01 |
| 8. | Wasser | 0,30 |

**Tabelle 8: Zusammensetzung des Lacks für Beispiel 13**

| Lacksystem | Additiv | Additivgehalt* | Anzahl Doppelhübe MEK |
|---|---|---|---|
| HBST337 | Aquacer 535 | 0,9 | 34 |
| HBST337 | -- | -- | 43 |
| HBST337 | ZnO | 0,9 | 107 |
| HBST337 | SiO₂ | 0,9 | 57 |

| | | | |
|---|---|---|---|
| *(Masse in trockener Schicht) /% | | | |

## Patentansprüche

1. Verwendung von nanoskaligen ZnO-Partikeln in einem wässrigen Bindemittelsystem zur Verringerung der Trockenzeit oder zur Erhöhung der Blockfestigkeit des getrockneten oder gehärteten Bindemittelsystems oder zur Erhöhung der Beständigkeit des getrockneten oder gehärteten Bindemittelsystems gegen Chemikalien, Detergenzien, Wärme, Bewitterung oder biologischen Befall.

2. Verwendung nach Anspruch 1, **dadurch gekennzeichnet, dass** die nanoskaligen ZnO-Partikeln als Pulver oder als Dispersion der nanoskaligen ZnO-Partikel zum wässrigen Bindemittelsystem gegeben werden.

3. Verwendung nach Anspruch 2, **dadurch gekennzeichnet, dass** die Dispersion eine wässrige Dispersion ist.

4. Verwendung nach einem der Ansprüche 1 bis 3, **dadurch gekennzeichnet, dass** das Bindemittelsystem eine Beschichtungszusammensetzung ist.

5. Verwendung nach einem der Ansprüche 1 bis 4, **dadurch gekennzeichnet, dass** die nanoskaligen ZnO-Partikel oberflächenmodifizierte, nanoskalige ZnO-Partikel sind, die mit einer Phosphonocarbonsäure, einem Salz der Phosphonocarbonsäure oder einer Mischung davon oberflächenmodifiziert sind.

6. Oberflächenmodifizierte, nanoskalige Zinkoxid-Partikel, **dadurch gekennzeichnet, dass** die Zinkoxid-Partikel mit einer Phosphonocarbonsäure, einem Salz der Phosphonocarbonsäure oder einer Mischung davon oberflächenmodifiziert sind, wobei die Phosphonocarbonsäure 2-Phosphono-1,2,4-butantricarbonsäure ist und eine Mischung von 2-Phosphono-1,2,4-butantricarbonsäure und Salz von 2-Phosphono-1,2,4-butantricarbonsäure mit einwertigen Kationen (M⁺) verwendet wird, wobei das Molverhältnis M⁺ zu 2-Phosphono-1,2,4-butantricarbonsäure und deren Salzen im Bereich von 0,1 : 1 bis 3 :1 liegt.

7. Oberflächenmodifizierte, nanoskalige Zinkoxid-Partikel nach Anspruch 6, **dadurch gekennzeichnet, dass** die oberflächenmodifizierten, nanoskaligen Zinkoxid-Partikel als Pulver oder in einer wässrigen Dispersion vorliegen.

8. Oberflächenmodifizierte, nanoskalige Zinkoxid-Partikel nach Anspruch 6 oder 7. **dadurch gekennzeichnet, dass** M⁺ ein Alkali- oder Ammoniumkation ist.

9. Verfahren zur Herstellung von oberflächenmodifizierten, nanoskaligen ZnO-Partikel nach einem der Ansprüche 6 bis 8, bei dem ZnO-Partikel in einem flüssigen Medium in Anwesenheit von einer Mischung der Phosphonocarbonsäure und dem Salz der Phosphonocarbonsäure einer Dispergierbehandlung unterworfen werden.

10. Verwendung von oberflächenmodifizierten, nanoskaligen ZnO-Partikel nach einem der Ansprüche 6 bis 8 als UV-Schutz, Katalysator, Aktivator für die Vulkanisation, zur Herstellung optischer Systeme, zur Herstellung elektronischer Bauteile, zur Veränderung optischer oder elektronischer Eigenschaften von Formkörpern, Beschichtungen oder Bulkmaterialien.

## Claims

1. The use of nanoscale ZnO particles in an aqueous binder system for reducing the drying time or for increasing the blocking resistance of the dried or cured binder system or for increasing the resistance of the dried or cured binder system against chemicals, detergents, heat, weathering or biological infestation.

2. The use according to claim 1, **characterized in that** the nanoscale ZnO particles are added as a powder or as a dispersion of the nanoscale ZnO particles to the aqueous binder system.

3. The use according to claim 2, **characterized in that** the dispersion is an aqueous dispersion.

4. The use according to any of claims 1 to 3, **characterized in that** the binder system is a coating composition.

5. The use according to any of claims 1 to 4, **characterized in that** the nanoscale ZnO particles are surface-modified nanoscale ZnO particles which are surface-modified with a phosphonocarboxylic acid, with a salt of phosphonocarboxylic acid or with a mixture thereof.

6. Surface-modified nanoscale zinc oxide particles **characterized in that** the zinc oxide particles are surface-modified with a phosphonocarboxylic acid, with a salt of the phosphonocarboxylic acid or with a mixture thereof, wherein the phosphonocarboxylic acid is 2-phosphono-1,2,4-butanetricarboxylic acid and a mixture of 2-phosphono-1,2,4-butanetricarboxylic acid and salt of 2-phosphono-1,2,4-butanetricarboxylic acid with monovalent cations (M⁺) is used, the molar ratio of M⁺ to 2-phosphono-1,2,4-butanetricarboxylic acid and salts thereof being in the range from 0.1:1 to 3:1.

7. The surface-modified nanoscale zinc oxide particles according to claim 6, **characterized in that** the surface-modified nanoscale zinc oxide particles are present as a powder or in an aqueous dispersion.

8. The surface-modified nanoscale zinc oxide particles according to claim 6 or 7, **characterized in that** M⁺ being an alkali metal cation or ammonium cation.

9. A process for preparing surface-modified nanoscale ZnO particles according to any of claims 6 to 8, in which ZnO particles are subjected in a liquid medium, in the presence of a mixture of the phosphonocarboxylic acid and the salt of the phosphonocarboxylic acid to a dispersing treatment.

10. The use of surface-modified nanoscale ZnO particles according to any of claims 6 to 8 as UV protection, catalyst, activator for vulcanization, for producing optical systems, for producing electronic components, for modifying optical or electronic properties of moldings, coatings or bulk materials.

## Revendications

1. Utilisation de particules de ZnO nanoscalaires dans un système de liants aqueux pour réduire le temps de séchage ou pour augmenter le pouvoir couvrant du système de liants séché ou durci ou pour augmenter la résistance du système de liants séché ou durci aux produits chimiques, aux détergents, à la chaleur, aux intempéries ou aux attaques biologiques.

2. Utilisation selon la revendication 1, **caractérisée en ce que** les particules de ZnO nanoscalaires sont ajoutées sous forme de poudre ou de dispersion de particules de ZnO nanoscalaires au système de liants aqueux.

3. Utilisation selon la revendication 2, **caractérisée en ce que** la dispersion est une dispersion aqueuse.

4. Utilisation selon l'une des revendications 1 à 3, **caractérisée en ce que** le système de liants est une composition de revêtement.

5. Utilisation selon l'une des revendications 1 à 4, **caractérisée en ce que** les particules de ZnO nanoscalaires sont des particules de ZnO nanoscalaires modifiées en surface avec un acide phosphonocarboxylique, un sel d'acide phosphonocarboxylique, ou un mélange de ceux-ci.

6. Particules d'oxyde de zinc nanoscalaires modifiées en surface, **caractérisées en ce que** les particules d'oxyde de zinc sont modifiées en surface avec un acide phosphonocarboxylique, un sel d'acide phosphonocarboxylique ou un mélange de ceux-ci, l'acide phosphonocarboxylique étant l'acide 2-phosphono-1,2,4-butanetricarboxylique et un mélange d'acide 2-phosphono-1,2,4-butanetricarboxylique et de sel d'acide 2-phosphono-1,2,4-butanetricarboxylique avec des cations monovalents (M⁺) étant utilisés, le rapport molaire entre M⁺ et l'acide 2-phosphono-1,2,4-butanetricarboxylique et ses sels se situant dans la plage de 0,1:1 à 3:1.

7. Particules d'oxyde de zinc nanoscalaires modifiées en surface selon la revendication 6, **caractérisées en ce que** les particules d'oxyde de zinc nanoscalaires modifiées en surface se présentent sous forme de poudre ou dans une dispersion aqueuse.

8. Particules d'oxyde de zinc nanoscalaires modifiées en surface selon la revendication 6 ou 7, **caractérisées en ce que** M⁺ est un cation alcalin ou d'ammonium.

9. Procédé de production de particules de ZnO nanoscalaires modifiées en surface selon l'une des revendications 6 à 8, dans lequel les particules de ZnO sont soumises à un traitement de dispersion dans un milieu liquide en présence d'un mélange d'acide phosphonocarboxylique et du sel d'acide phosphonocarboxylique.

10. Utilisation de particules de ZnO nanoscalaires modifiées en surface selon l'une des revendications 6 à 8 comme protection anti-UV, catalyseur, activateur pour la vulcanisation, pour la production de systèmes optiques, la production de composants électroniques, la modification des propriétés optiques ou électroniques des corps moulés, des revêtements ou des matériaux en vrac.
